# FASCICULE DE BREVET EUROPEEN

(11) **EP 3 545 384 B1**
(45) Date de publication et mention de la délivrance du brevet: **17.04.2024**
(21) Numéro de dépôt: 17822140.4
(22) Date de dépôt: 22.11.2017
(51) Int. Cl.: G06F 1/26, G06F 1/32, H04W 40/00, H04W 52/02, H04B 7/02

(54) **SYSTÈME DE GESTION DE CONSOMMATION ÉLECTRIQUE DANS UN APPAREIL**
SYSTEM ZUR VERWALTUNG DES STROMVERBRAUCHS IN EINER VORRICHTUNG
SYSTEM FOR MANAGING ELECTRICITY CONSUMPTION IN AN APPARATUS

(30) Priorité: 23.11.2016 FR 1661406
(43) Date de publication de la demande: 02.10.2019
(73) Titulaire: Sagemcom Broadband SAS, 92270 Bois-Colombes (FR)
(72) Inventeur: NEGELE, Jean-Philippe, 92500 Rueil Malmaison (FR); REUCHE, Anthony, 92500 Rueil Malmaison (FR); LALAM, Massinissa, 92500 Rueil Malmaison (FR)
(74) Mandataire: Cabinet Le Guen Maillet
(86) Numéro de dépôt international: PCT/EP2017/080000
(87) Numéro de publication internationale: WO 2018/095947

(56) Documents cités:
- US-A1- 2006 141 968
- US-B1- 6 665 806

## Description

L'invention concerne un système de gestion de consommation électrique dans un appareil comprenant une batterie protégée par un fusible, l'appareil pouvant être alimenté électriquement par une alimentation secteur ou par la batterie, l'alimentation par la batterie étant destinée à relayer l'alimentation secteur en cas de coupure de l'alimentation secteur. L'invention concerne de plus un procédé de gestion de la consommation électrique dudit appareil mis en oeuvre par ledit appareil.

Certains appareils, tels que les passerelles internet (« gateway » en terminologie anglo-saxonne), comprennent des batteries de secours leur permettant de continuer à fonctionner malgré une coupure d'alimentation secteur.

Les batteries de secours disposent de protections internes permettant de sécuriser les appareils. Ces protections sont réalisées entre autres par des fusibles. Dimensionner ces fusibles est un point sensible lors d'une conception d'appareils. En effet, les batteries de secours sont considérées comme une source de courant. Cette source de courant peut être élevée ou limitée. Une source de courant élevée implique des contraintes de conception mécanique dans les appareils concernés. Ainsi, pour un appareil devant comprendre une source d'énergie élevée, il peut être nécessaire de prévoir une enveloppe contre le feu et ainsi réduire (voire supprimer) des ouvertures de ventilation dans des parois mécaniques. Ceci a pour conséquence d'empêcher une convection naturelle et impose un ajout d'un système de ventilation forcée ce qui est généralement considéré comme inacceptable pour certains appareils tels que les passerelles. Un appareil pouvant comprendre une source d'énergie à puissance limitée peut implémenter des trous d'aération. Utiliser un fusible ayant une faible limite de courant permet de considérer les batteries comme une source de courant à puissance limitée et ainsi d'alléger les contraintes de conception mécaniques.

Ces contraintes de conception mécaniques impliquent qu'en fonctionnement normal, c'est-à-dire lorsqu'ils sont alimentés par le secteur, certains appareils sont susceptibles de consommer une énergie supérieure à ce que pourraient fournir des batteries de secours. Lors d'une coupure de l'alimentation électrique secteur (lors d'un passage sur batteries de secours), il est alors préférable de limiter le courant consommé par l'appareil pour ne pas endommager de manière irréversible le fusible protégeant les batteries de secours. Or, les fusibles sont des modules matériels ayant un temps de réaction de quelques centaines de millisecondes. Si on souhaite ne pas endommager un fusible, il est donc impératif de réduire la consommation de courant de l'appareil dans un temps inférieur au temps de réaction du fusible. Toutefois, il est souhaitable que cette réduction de consommation de courant soit transparente pour un utilisateur de l'appareil. En d'autres termes, l'utilisateur doit pouvoir utiliser une majorité voire la totalité des fonctionnalités offertes normalement par l'appareil. Une diminution des performances de l'appareil est cependant acceptable.

Il existe un état de l'art significatif dans le domaine des procédés permettant à un appareil d'adapter sa consommation de courant à des conditions d'alimentation électrique. Les documents US 2006/141968 A1 et US 6 665 806 B1 divulguent de telles solutions.

Toutefois, ces procédés mettent en oeuvre une partie logicielle, ce qui implique que ces procédés ne sont pas capables de réagir instantanément à un changement de conditions d'alimentation électrique ou en tout cas en un temps inférieur au temps de réaction d'un fusible.

Lorsqu'un appareil concerné par un passage à une alimentation par batterie est un appareil communicant, tel qu'une passerelle, une diminution des performances de l'appareil n'a pas seulement un impact sur l'appareil. En effets, des équipements distants, avec lesquels l'appareil est connecté, peuvent aussi être impactés par la diminution des performances dudit appareil.

Il est souhaitable de pallier ces inconvénients de l'état de la technique. Il est notamment souhaitable de proposer un système et un procédé permettant de réduire instantanément la consommation électrique dans un appareil comprenant des batteries de secours de manière à préserver le fusible protégeant ces batteries. Par ailleurs, la réduction de consommation électrique doit être de préférence transparente pour un utilisateur, ou au moins avoir un impact limité sur les fonctionnalités offertes par l'appareil. De plus, la coupure de l'alimentation secteur pouvant être de durée indéfinie, il est préférable de prévoir également une solution pour économiser l'énergie contenue dans les batteries de secours après la coupure d'alimentation secteur.

Il est de plus souhaitable de proposer un système et un procédé qui soient simples à mettre en oeuvre et à faible coût.

Selon un premier aspect de la présente invention, la présente invention concerne un appareil comprenant une batterie protégée par un fusible de sécurité apte à supporter un courant maximum d'alimentation de l'appareil pendant une durée prédéfinie, l'appareil pouvant être alimenté électriquement par une alimentation secteur ou par la batterie, l'alimentation par la batterie étant destinée à relayer l'alimentation secteur en cas de coupure de l'alimentation secteur, et un système de gestion de consommation électrique, ledit système comprenant un module de surveillance d'une tension d'entrée de l'appareil et de détection d'une coupure de l'alimentation secteur de l'appareil et un module de coupure d'alimentation de modules matériels compris dans l'appareil pour réduire la consommation électrique de l'appareil. Le module de surveillance et détection et le module de coupure d'alimentation sont mis en oeuvre par des modules entièrement matériels indépendamment de toute interprétation d'instructions machine et aptes à réagir en un temps inférieur à la durée prédéfinie pendant laquelle le fusible peut supporter ledit courant d'alimentation maximum, le module de coupure d'alimentation permettant d'obtenir une réduction de consommation électrique prédéfinie de l'appareil de sorte que l'appareil consomme un courant d'alimentation inférieure au courant d'alimentation maximum, le module de coupure d'alimentation étant piloté par le module de surveillance et de détection pour détecter une coupure de l'alimentation secteur et configuré pour ouvrir un circuit d'alimentation électrique d'au moins un module matériel prédéfini compris dans l'appareil lorsqu'une coupure d'alimentation secteur est détectée,
le circuit d'alimentation électrique d'un module matériel de l'appareil ne peut être ouvert par le module de coupure d'alimentation pour réduire la consommation électrique que lorsqu'un verrou associé à ce module matériel est dans un mode activé et ne peut être ouvert lorsque ledit verrou est dans un mode désactivé, chaque verrou étant configuré dans le mode activé ou désactivé par un processeur de l'appareil en utilisant des instructions machines,
de sorte que suite à l'ouverture du circuit d'alimentation de chaque module matériel prédéfini selon la configuration du verrou permettant d'obtenir la réduction de consommation électrique prédéfinie de l'appareil, le processeur est apte à provoquer l'ouverture du circuit d'alimentation d'autres modules matériels de l'appareil.

Ainsi, le système permet de ne pas endommager le fusible de sécurité en cas de coupure d'alimentation secteur.

Selon un mode de réalisation, le module de surveillance et de détection comprend des moyens pour comparer une tension représentative d'une tension d'alimentation de l'appareil à une tension de référence prédéfinie, une coupure de l'alimentation secteur étant détectée lorsque la tension de référence prédéfinie est supérieure à la tension représentative de la tension d'alimentation de l'appareil.

Selon un deuxième aspect de l'invention, l'invention concerne un procédé de gestion de consommation électrique dans un appareil selon l'un des modes de réalisation précédents. Le procédé comprend les étapes suivantes mises en oeuvre par les modules de surveillance et de détection (111) et de coupure d'alimentation (112) :: surveiller une tension d'alimentation d'entrée de l'appareil et détecter une coupure d'alimentation secteur ;
ouvrir un circuit d'alimentation électrique d'au moins un module matériel prédéfini compris dans l'appareil lorsqu'une coupure d'alimentation secteur est détectée,
le circuit d'alimentation électrique d'un module matériel de l'appareil ne peut être ouvert par le module de coupure d'alimentation pour réduire la consommation électrique que lorsqu'un verrou associé à ce module matériel est dans un mode activé et ne peut être ouvert lorsque ledit verrou est dans un mode désactivé, chaque verrou étant configuré dans le mode activé ou désactivé par un processeur de l'appareil en utilisant des instructions machines,
de sorte que suite à l'ouverture du circuit d'alimentation de chaque module matériel prédéfini selon la configuration du verrou permettant d'obtenir la réduction de consommation électrique prédéfinie de l'appareil, le processeur est apte à provoquer l'ouverture du circuit d'alimentation d'autres modules matériels de l'appareil.

Selon un mode de réalisation, les autres modules matériels comprennent une pluralité de modules de communication sans fil gérant chacun au moins une liaison de communication sans fil, chaque liaison sans fil étant associée à au moins un équipement distant, le procédé comprend : vérifier si l'alimentation secteur de l'appareil est rétablie ; lorsque l'alimentation secteur n'est pas rétablie : obtenir une information représentative d'un premier module de communication sans fil pouvant être coupé et transmettre à chaque équipement distant associé à une liaison sans fil gérée par le premier module de communication sans fil un message comprenant une information représentative de ladite liaison sans fil; couper l'alimentation électrique du premier module de communication sans fil ; et, vérifier régulièrement si l'alimentation secteur a été rétablie.

Selon un mode de réalisation, ledit message comprend en outre une liste indiquant à chaque équipement distant associé à une liaison sans fil gérée par le premier module de communication sans fil au moins une liaison sans fil vers laquelle migrer.

Selon un mode de réalisation, la liaison sans fil vers laquelle migrer est une liaison sans fil existante gérée par un deuxième module de communication sans fil ou une liaison sans fil temporaire créée par un deuxième module de communication sans fil suite à la détection de la coupure d'alimentation secteur.

Selon un mode de réalisation, le procédé comprend en outre : sauvegarder un identifiant de chaque équipement distant associé à une liaison sans fil gérée par le premier module de communication sans fil ; et, utiliser les identifiants sauvegardés pour permettre à un deuxième module de communication sans fil de traiter en priorité chaque équipement distant concerné par lesdits identifiants si ceux-ci tentent de migrer vers une liaison sans fil gérée par ledit deuxième module de communication sans fil.

Selon un mode de réalisation, lorsque l'alimentation secteur est rétablie, le procédé comprend en outre : autoriser la réalimentation électrique de chaque module matériel de l'appareil coupé lors de la détection de la coupure de l'alimentation secteur ; et, transmettre un message à chaque équipement distant concerné par la coupure d'alimentation électrique du premier module de communication sans fil indiquant que chaque liaison sans fil gérée par le premier module de communication sans fil a été réactivée.

Selon un mode de réalisation, chaque message est transmis à chaque équipement distant concerné par la coupure du premier module de communication sans fil selon un mode de communication point à point ou selon un mode de communication point à multipoints ou selon un mode de communication multidiffusion.

Selon un mode de réalisation, le mode de communication multidiffusion est utilisé lors d'une détection d'une coupure d'alimentation secteur, et le mode de communication point à point ou le mode de communication point à multipoints est utilisé lors d'une détection d'un rétablissement de l'alimentation secteur.

Selon un quatrième aspect de l'invention, l'invention concerne un programme d'ordinateur, comprenant des instructions pour mettre en oeuvre, par un appareil, des étapes du procédé selon le deuxième aspect lorsque ledit programme est exécuté par un processeur dudit appareil.

Selon un cinquième aspect de l'invention, l'invention concerne des moyens de stockage stockant un programme d'ordinateur comprenant des instructions pour mettre en oeuvre, par un appareil, des étapes du procédé selon le deuxième aspect lorsque ledit programme est exécuté par un processeur dudit appareil.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un appareil mettant en oeuvre l'invention ;
- la Fig. 2 illustre schématiquement un exemple d'architecture matérielle d'un système dont la consommation électrique est gérée par un système de gestion de la consommation électrique selon l'invention ;
- la Fig. 3 illustre schématiquement un détail d'un module de communication dont la consommation électrique est gérée par un système de gestion de la consommation électrique selon l'invention ;
- la Fig. 4 illustre schématiquement un premier exemple de système de gestion de la consommation électrique selon l'invention ;
- la Fig. 5 illustre schématiquement un deuxième exemple de système de gestion de la consommation électrique selon l'invention ;
- la Fig. 6 illustre schématiquement un premier exemple de procédé de gestion de la consommation électrique selon l'invention ;
- les Figs. 7A, 7B et 7C illustrent schématiquement trois exemples de modules de détection d'une coupure de l'alimentation secteur 111 adaptés à l'invention ; et,
- la Fig. 8 illustre schématiquement un deuxième exemple de procédé de gestion de la consommation électrique selon l'invention.

L'invention est décrite par la suite dans un contexte de passerelle internet. L'invention pourrait toutefois être mise en oeuvre dans un autre contexte, dans tout appareil comprenant une batterie apte à relayer une alimentation secteur, l'appareil étant communiquant ou pas. Par ailleurs, une partie de l'invention concerne des activations/désactivations de module Wi-Fi et d'une gestion d'équipements distants associés à des liaisons Wi-Fi gérées par ces modules Wi-Fi. L'invention pourrait tout aussi bien s'adapter à d'autres modules de communication que des modules Wi-Fi, tels que par exemple des modules bluetooth ou ZigBee.

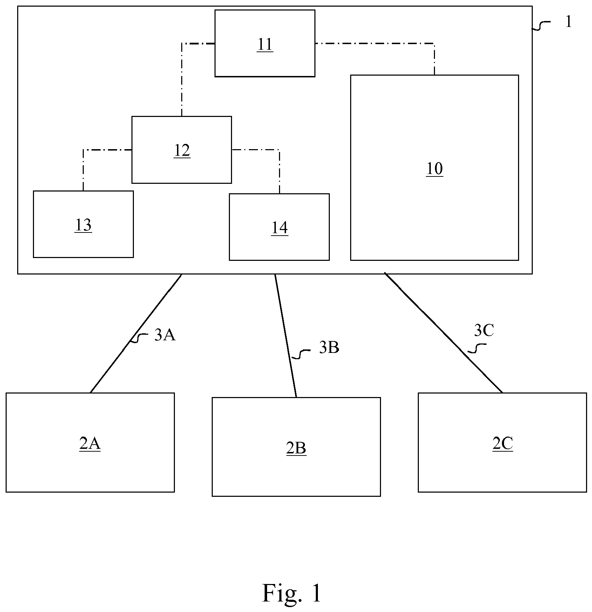

La **Fig. 1** illustre schématiquement un appareil 1 mettant en oeuvre l'invention.

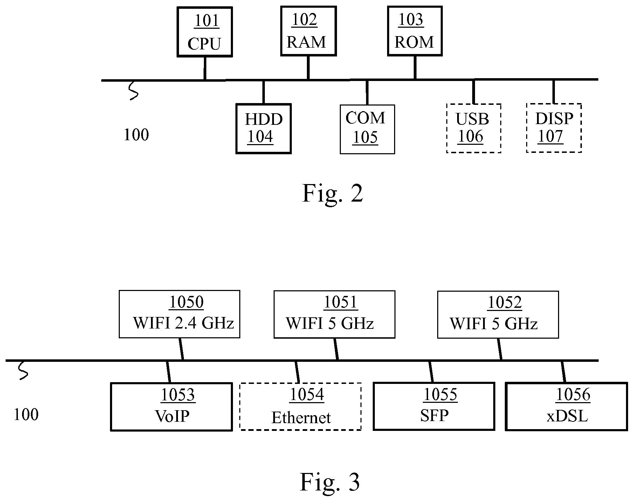

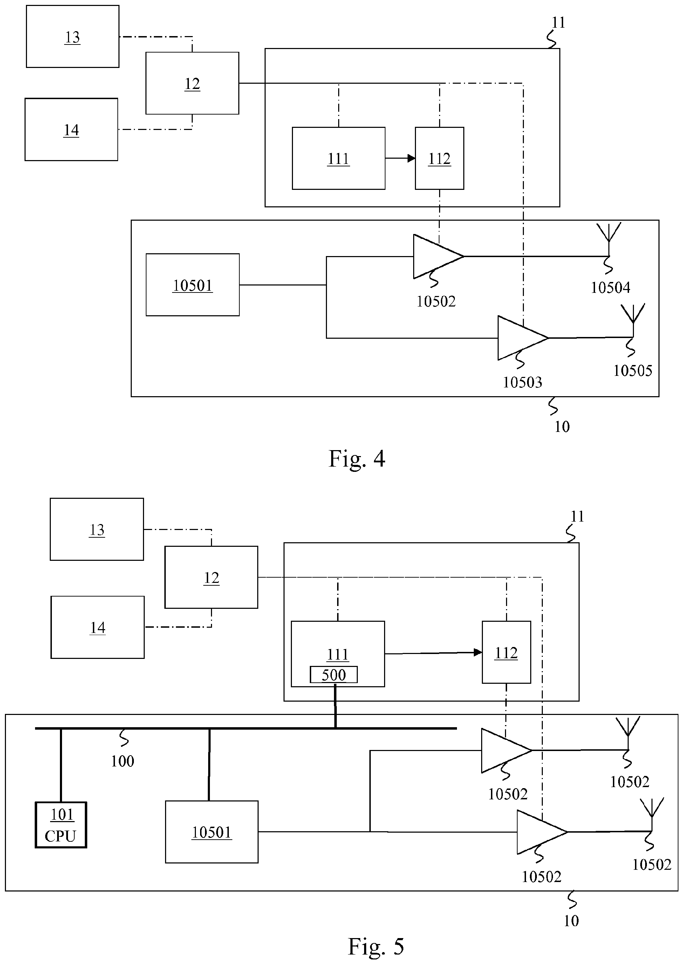

Dans l'exemple de la Fig. 1, l'appareil 1 est une passerelle. La passerelle 1 comprend un système coeur 10 que nous détaillons en relation avec les Figs. 2 et 3 gérant toutes les fonctionnalités de la passerelle 1, un module d'alimentation secteur 13, un module d'alimentation par batterie 14, un module de transition 12, assurant un passage de l'alimentation secteur à l'alimentation par batterie lorsque l'alimentation secteur est coupée et un passage de l'alimentation par batterie à l'alimentation secteur lorsque l'alimentation secteur est réactivée. La passerelle 1 comprend de plus un système de gestion de la consommation électrique 11 que nous détaillons par la suite en relation avec les Figs. 4 et 5.

Dans la Fig. 1, des équipements distants 2A, 2B et 2C sont connectés à la passerelle 1 par exemple par des liaisons Wi-Fi 3A, 3B et 3C.

On note que dans la Fig. 1 (et dans les Figs. 4 et 5 que nous décrivons par la suite), des traits pleins représentent des lignes de communication de données alors que des traits hachurés représentent des lignes d'alimentations électriques.

La **Fig. 2** illustre schématiquement un exemple d'architecture matérielle du système coeur 10 dont la consommation électrique est gérée par un système de gestion de la consommation électrique 11 selon l'invention.

Selon l'exemple d'architecture matérielle représentée à la Fig. 2, le système coeur 10 comprend alors, reliés par un bus de communication 100 : un processeur ou CPU (« Central Processing Unit » en anglais) 101 ; une mémoire vive RAM (« Random Access Memory » en anglais) 102 ; une mémoire morte ROM (« Read Only Memory » en anglais) 103 ; une unité de stockage telle qu'un disque dur ou un lecteur de support de stockage, tel qu'un lecteur de cartes SD (« Secure Digital » en anglais) 104 ; une interface de communication 105 permettant à l'appareil 10 de communiquer avec d'autres appareils ou dispositifs. Nous détaillons le module de communication 105 en relation avec la Fig. 3. Le système coeur 10 comprend en outre un module USB (Bus Série Universel : « Universal Serial Bus » en terminologie anglo-saxonne) 106 apte à lire, par exemple, une clé USB et un module d'affichage 107 tel qu'un écran à cristaux liquides.

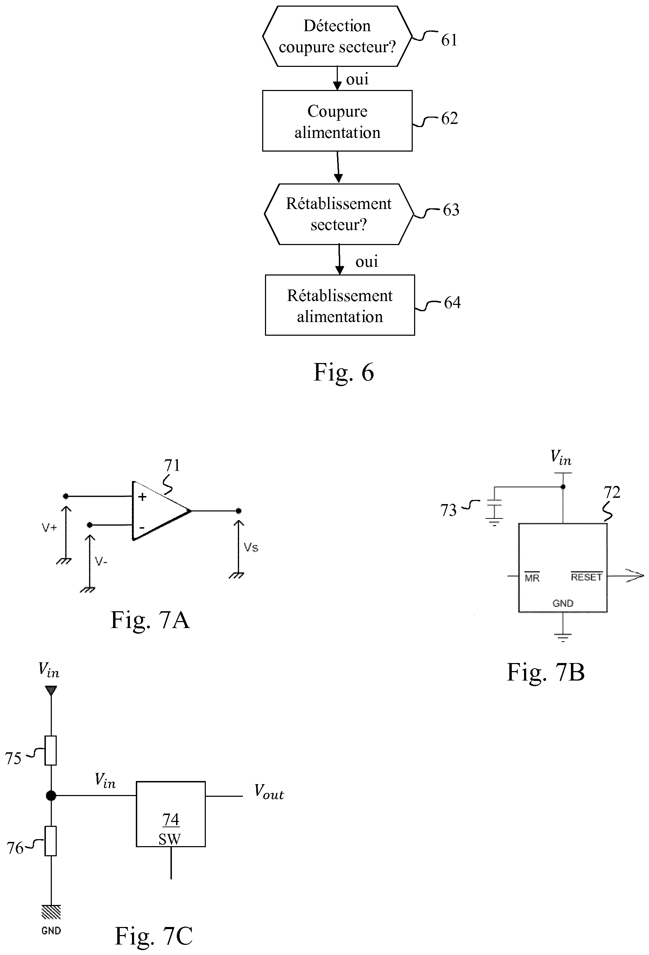

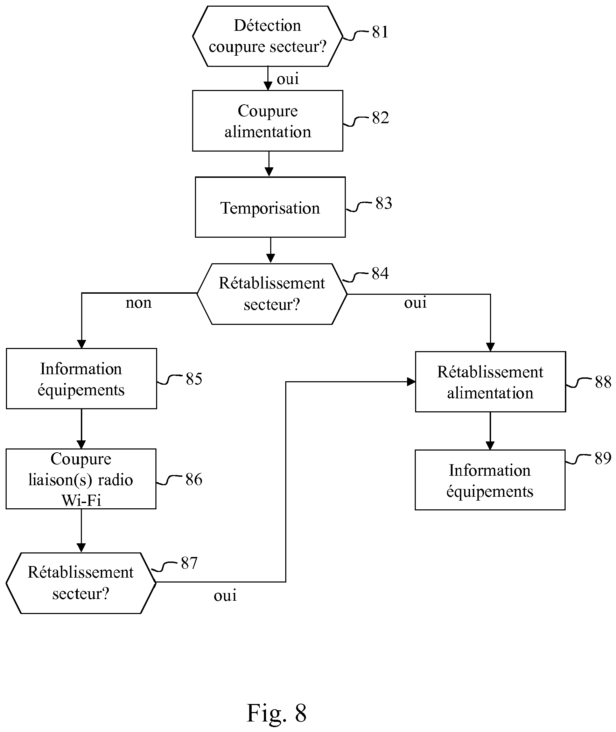

Le processeur 101 est capable d'exécuter des instructions chargées dans la RAM 102 à partir de la ROM 103, d'une mémoire externe (non représentée), d'un support de stockage (tel qu'une carte SD), ou d'un réseau de communication. Lorsque l'appareil 10 est mis sous tension, le processeur 101 est capable de lire de la RAM 102 des instructions et de les exécuter. Ces instructions forment un programme d'ordinateur causant la mise en oeuvre par le processeur 101, des étapes de procédés décrits ci-après en relation avec les Figs. 6 et 8.

Les étapes des procédés décrits en relation avec les Figs. 6 et 8 peuvent être implémentées sous forme logicielle par exécution d'un ensemble d'instructions par une machine programmable, par exemple un DSP (« Digital Signal Processor » en anglais) ou un microcontrôleur, ou être implémentées sous forme matérielle par une machine ou un composant dédié, par exemple un FPGA (« Field-Programmable Gate Array » en anglais) ou un ASIC (« Application-Specific Integrated Circuit » en anglais).

La **Fig. 3** illustre schématiquement un détail du module de communication 105 dont la consommation électrique est gérée par un système de gestion de la consommation électrique 11 selon l'invention.

Le module de communication 105 comprend, reliés par le bus de communication 100, un premier module Wi-Fi 1050 mettant en oeuvre les normes IEEE802.11b, g ou n, un deuxième module Wi-Fi 1051 mettant en oeuvre la norme IEEE802.11a, n ou ac et un troisième module Wi-Fi 1052 identique au module Wi-Fi 1051. Les équipements distants 2A, 2B et 2C sont connectés à la passerelle 1 par des liaisons Wi-Fi 3A, 3B et 3C gérées respectivement par les modules Wi-Fi 1050, 1051 et 1052. Chaque module Wi-Fi est apte à gérer au moins une liaison Wi-Fi appelée communément BSS (ensemble de services Basique : « Basic Service Set » en terminologie anglo-saxonne). Un équipement distant qui parvient à se connecter à un BSS est dit *associé* à ce BSS. L'équipement distant a alors accès aux services offerts par la passerelle par le biais du BSS avec lequel il est associé. Dans l'exemple décrit en relation avec la Fig. 1, en cas d'alimentation secteur, l'équipement distant 2A est associé au BSS 3A (*i.e.* à la liaison Wi-Fi 3A) géré par le module Wi-Fi 1050. L'équipement distant 2B est associé au BSS 3B *(i.e.* à la liaison Wi-Fi 3B) géré par le module Wi-Fi 1051. L'équipement distant 2C est associé au BSS 3C (*i.e.* à la liaison Wi-Fi 3C) géré par le module Wi-Fi 1052.

Le module de communication 105 comprend de plus, un module 1053 de communication de voix sur réseau compatible IP (« Internet Protocol » en terminologie anglo-saxonne) communément appelé VoIP (« Voice over IP » en terminologie anglo-saxonne), un module Ethernet 1054, un module SFP (Petit facteur de forme enfichable : « Small Form-factor Pluggable » en terminologie anglo-saxonne) 1055 et un module xDSL (ADSL, SDSL, ...)(ligne d'accès numérique asymétrique/symétrique : « Asymetric/Symetric Digital Subscriber Line » en terminologie anglo-saxonne) 1056.

Dans un exemple d'utilisation de la passerelle 1, lors d'une coupure d'alimentation secteur, on considère que la fonctionnalité de Voix sur IP doit être préservée afin de permettre à un utilisateur de pouvoir contacter des secours même en cas de coupure d'alimentation secteur. Afin d'assurer cette fonctionnalité, certains modules matériels du système coeur 10 sont primordiaux, *i.e.* la fonctionnalité de voix sur IP ne pourrait pas être assurée sans ces modules matériels. D'autres modules matériels tels les modules Wi-Fi peuvent être dégradés mais doivent rester fonctionnels.

Les modules matériels du système coeur 10 décrits en relation avec les Figs. 2 et 3 peuvent alors être classés en trois catégories :
- les modules matériels assurant des fonctions critiques, regroupés par la suite sous l'appellation *modules critiques,* c'est-à-dire assurant des fonctions de base de la passerelle 1 ou essentielles pour assurer la fonctionnalité de voix sur IP. Il s'agit du bus de communication 100, du processeur 101, de la mémoire vive RAM 102, de la mémoire morte ROM 103, de l'unité de stockage 104, du module VoIP 1053, du module SFP 1055 et du module xDSL 1056.
- les modules matériels assurant des fonctions non nécessaires, regroupés par la suite sous l'appellation *modules optionnels,* c'est-à-dire dont un utilisateur peut se passer pendant une coupure d'alimentation secteur. Il s'agit du module USB 106, du module d'affichage 107 et du module Ethernet 1054.
- les modules matériels assurant des fonctions secondaires, appelés par la suite *modules secondaires,* c'est-à-dire des fonctions qui doivent être préservées mais qui peuvent être dégradées. Il s'agit des modules Wi-Fi 1050, 1051 et 1052.

Un objectif du système de gestion de la consommation électrique 11 est d'agir sur les modules optionnels et les modules secondaires pour réduire la consommation électrique de la passerelle lors d'une coupure d'alimentation secteur.

La **Fig. 4** illustre schématiquement un premier exemple de système de gestion de la consommation électrique 11 selon l'invention.

Dans l'exemple de la Fig. 4, le système de gestion de la consommation électrique 11 est placé dans un contexte d'utilisation. On retrouve donc dans la Fig. 4, le module d'alimentation secteur 13, le module d'alimentation par batteries 14, le module de transition 12 et une version simplifiée du système coeur 10 dans laquelle seul est représenté le module Wi-Fi 1050. Le module d'alimentation par batterie 14 comprend au moins une batterie. Chaque batterie du module d'alimentation par batterie 14 est protégée par un fusible, appelé *fusible de sécurité* par la suite, apte à supporter un courant d'alimentation de la passerelle 1 maximum pendant une durée prédéfinie *T*. Le module Wi-Fi 1050 est représenté sous forme détaillée comprenant un module de traitement 10501, une antenne 10504 et une antenne 10505 et, associés respectivement à l'antenne 10504, un amplificateur de puissance 10502 et à l'antenne 10505, un amplificateur de puissance 10503. Il est connu qu'un amplificateur de puissance est consommateur en énergie électrique. Une réduction de consommation significative serait donc obtenue si ce type de module matériel était coupé.

Le système de gestion de la consommation électrique 11 comprend un module de détection d'une coupure de l'alimentation secteur 111 et un module de réduction de la consommation électrique 112. Le module de détection d'une coupure de l'alimentation secteur 111 et le module de réduction de la consommation électrique 112 sont des modules entièrement matériels (« hardware » en terminologie anglo-saxonne). Les modules 111 et 112 fonctionnent donc indépendamment de toute interprétation d'instructions machine (*i.e.* ce ne sont pas des modules logiciels et ils ne reçoivent pas d'instructions logicielles), et sont aptes à réagir en un temps inférieur à la durée prédéfinie *T*.

Le module de détection d'une coupure de l'alimentation secteur 111 surveille une tension d'entrée de la passerelle 1. Lorsqu'une coupure de l'alimentation secteur de la passerelle 1 se produit, cette tension d'entrée chute. Cette chute peut alors être détectée. Le module de détection d'une coupure de l'alimentation secteur 111 peut être implémenté sous différentes formes.

Les **Figs. 7A, 7B** et **7C** illustrent schématiquement trois exemples de modules de détection d'une coupure de l'alimentation secteur 111 adaptés à l'invention.

Dans la **Fig. 7A**, le module de détection d'une coupure de l'alimentation secteur 111 est implémenté par un amplificateur opérationnel 71 monté en comparateur simple. Une tension d'entrée V+ est comparée à une tension d'entrée V-. La tension V+ est représentative de la tension d'entrée de la passerelle 1 à surveiller. La tension V- est représentative d'une référence de tension. La référence de tension est obtenue via un régulateur de tension dont une tension de sortie (*i*.*e*. la tension de référence) est toujours la même que la passerelle soit alimentée par le module d'alimentation secteur 13 ou le module d'alimentation par batterie 14. Une sortie (*i.e.* une tension de sortie) *Vₛ* de l'amplificateur opérationnel 71 dépend d'un signe d'une soustraction entre *V*+ et *V*-.

Dans la **Fig. 7B**, le module de détection d'une coupure de l'alimentation secteur 111 est implémenté par un superviseur de tension 72. Le superviseur de tension 72 comprend une sortie RESET qui est mise à zéro lorsqu'une tension surveillée *Vᵢₙ* chute en dessous d'une tension de référence prédéfinie dans le superviseur de tension 72.

Dans la **Fig. 7C****,** le module de détection d'une coupure de l'alimentation secteur 111 est implémenté par un pont diviseur de tension couplé à une porte logique 74. Le pont diviseur de tension est formé d'une résistance 75 et d'une résistance 76 (par exemple respectivement de 75kQ et de 27kQ). Une sortie *Vₒᵤₜ* de la porte logique 74 change d'état lorsqu'une tension d'entrée *Vᵢₙ* issue du pont diviseur de tension et représentative de la tension à surveiller passe sous une tension de référence prédéfinie.

La réduction de la consommation électrique est obtenue en coupant l'alimentation électrique de certains modules matériels compris dans la passerelle 1. Le module de réduction de la consommation électrique 112 assure ces coupures d'alimentation électrique. Le module de réduction de la consommation électrique 112 peut par exemple être mis en oeuvre par un transistor de puissance PMOS commandé par la sortie du module de détection d'une coupure de l'alimentation secteur 111. La sortie du module de détection d'une coupure de l'alimentation secteur 111 pilote donc le transistor de puissance PMOS et, en cas de coupure d'alimentation secteur, provoque une ouverture d'un circuit d'alimentation électrique de chaque module matériel devant être coupé.

Dans l'exemple de la Fig. 4, lorsqu'une coupure d'alimentation secteur est détectée par le module 111, cette détection provoque une coupure de l'alimentation électrique de l'amplificateur de puissance 10502 par le module 112. Le circuit d'alimentation électrique de l'amplificateur de puissance 10502 est alors ouvert par le module 112. Ainsi, le fonctionnement du module Wi-Fi 1050 est dégradé puisque seule une antenne de ce module dispose d'un amplificateur de puissance alimenté. Les autres antennes fonctionnent alors sans amplificateur de puissance, ce qui dégrade les performances du récepteur.

Dans un mode de réalisation, chaque amplificateur de puissance compris dans les modules Wi-Fi 1050, 1051 et 1052 comprend une entrée d'activation/désactivation permettant d'activer ou de désactiver ledit amplificateur de puissance. Dans ce mode de réalisation, la sortie du module de détection d'une coupure de l'alimentation secteur 111 désactive directement l'amplificateur de puissance 10502 via l'entrée d'activation/désactivation de celui-ci. Chaque entrée d'activation/désactivation constitue donc des moyens pour réduire la consommation électrique de la passerelle 1.

Le module Wi-Fi 1050 fait partie des modules secondaires dont le fonctionnement peut être dégradé. D'un point de vue global, lors d'une détection d'une coupure de l'alimentation électrique par le module 111, le module 112 coupe l'alimentation électrique de tous les modules optionnels et dégrade le fonctionnement de certains modules secondaires de manière à assurer que la passerelle consomme un courant d'alimentation inférieure au courant d'alimentation maximum que peut supporter le fusible de sécurité. Dans le mode de réalisation décrit en relation avec la Fig. 4, les modules secondaires dont le fonctionnement est dégradé sont prédéfinis. Par ailleurs, la manière par laquelle le fonctionnement de ces modules est dégradé est elle aussi prédéfinie. Par exemple, lorsque les modules secondaires sont les modules Wi-Fi 1050, 1051 et 1052, la dégradation consiste à n'alimenter qu'un amplificateur de puissance pour chaque module Wi-Fi. De cette manière, chaque module Wi-Fi ne peut utiliser de manière effective qu'une antenne.

La **Fig. 5** illustre schématiquement un deuxième exemple de système de gestion de la consommation électrique 11 selon l'invention.

La Fig. 5 diffère de la Fig. 4 en ce que la version simplifiée du système coeur 10 dans laquelle seul est représenté le module Wi-Fi 1050 fait apparaître cette fois le processeur 101 et le bus de communication 100.

Par ailleurs, le module de détection d'une coupure de l'alimentation secteur 111 comprend un module 500, appelé verrou. Le verrou 500 permet d'autoriser ou de ne pas autoriser une coupure d'alimentation électrique d'un module matériel de la passerelle 1. Ainsi, si une coupure d'alimentation secteur est détectée par le module 111, l'alimentation électrique d'un module matériel de la passerelle 1 n'est réellement coupée par le module 112 que si le verrou 500 correspondant à ce module matériel indique que cette coupure d'alimentation électrique est autorisée. Le circuit d'alimentation électrique d'un module matériel de la passerelle 1 ne peut donc être ouvert par le module 112 que si le verrou 500 associé à ce module matériel est dans un mode activé et ne peut être ouvert lorsque ledit verrou 500 est dans un mode désactivé.

Lorsque le module de détection d'une coupure de l'alimentation secteur 111 est le superviseur de tension 72 représenté en Fig. 7B, le verrou 500 est une entrée logique MR du superviseur de tension 72. Cette entrée logique, lorsqu'elle est activée, permet à la sortie RESET de passer à zéro lorsque la tension surveillée *Vᵢₙ* chute en-dessous du la tension de référence prédéfinie et, lorsqu'elle est désactivée, empêche la sortie RESET de passer à zéro lorsque la tension surveillée *Vᵢₙ* chute en-dessous de la tension de référence prédéfinie.

Lorsque le module de détection d'une coupure de l'alimentation secteur 111 est le pont diviseur de tension couplé à la porte logique représenté en Fig. 7C, le verrou 500 est une entrée logique SW de la porte logique 74. Lorsque cette entrée logique SW est activée, celle-ci permet à la sortie *Vₒᵤₜ* de la porte logique 74 de changer d'état lorsque la tension d'entrée *Vᵢₙ* passe sous la tension de référence prédéfinie. Lorsque l'entrée logique SW est désactivée, celle-ci empêche la sortie *Vₒᵤₜ* de la porte logique 74 de changer d'état lorsque la tension d'entrée *Vᵢₙ* passe sous la tension de référence prédéfinie.

Dans un mode de réalisation, le verrou 500 est un module logique (basé par exemple sur des portes logiques ET/OU) indépendant du module 111. Lorsque le verrou 500 est désactivé, il empêche le module 111 de provoquer une coupure d'alimentation par le module 112. Lorsque le verrou 500 est activé, il permet au module 111 de provoquer une coupure d'alimentation par le module 112.

Dans un mode de réalisation, le verrou 500 est connecté au processeur 101 par l'intermédiaire du bus de communication 100. Dans ce mode de réalisation, c'est le processeur 101 qui détermine si le verrou doit être dans un mode activé ou un mode désactivé et qui configure le verrou 500 en utilisant des instructions machine. La configuration du verrou 500 par le processeur 101 se fait en dehors d'un moment de passage d'une alimentation secteur à une alimentation par batterie. En d'autres termes, la configuration du verrou 500 par le processeur 101 peut se faire avant ou après un passage d'une alimentation secteur à une alimentation par batterie, mais en aucun cas pendant ce passage.

Dans un mode de réalisation, le système de gestion de la consommation électrique 11 comprend au moins un module de détection d'une coupure de l'alimentation secteur 111 et pour chaque dispositif matériel de la passerelle 1 pouvant faire l'objet d'une coupure d'alimentation électrique, un module de réduction de la consommation électrique 112 et un verrou 500. Lorsque le verrou 500 est compris dans le module de détection d'une coupure de l'alimentation secteur 111, le système de gestion de la consommation électrique 11 comprend un module de détection d'une coupure de l'alimentation secteur 111 pour chaque module matériel de la passerelle 1 pouvant faire l'objet d'une coupure d'alimentation électrique. Dans ce mode de réalisation, chaque verrou 500 est configuré dans le mode activé ou le mode désactivé par le processeur 101. Ce mode de réalisation permet au processeur 101 de contrôler finement quel module matériel de la passerelle 1 doit subir une coupure d'alimentation électrique. Les verrous des modules optionnels sont systématiquement activés de sorte que les modules matériels concernés sont systématiquement désactivés en cas de coupure d'alimentation secteur. Les verrous des modules secondaires peuvent être activés ou désactivés de manière adaptative en fonction de critères prédéfinis.

Dans un mode de réalisation, une configuration, appelée par la suite configuration prédéfinie, des verrous des modules secondaires, appelés par la suite verrous secondaires, permet d'obtenir une réduction de consommation électrique prédéfinie de la passerelle 1. La réduction de consommation électrique prédéfinie permet d'assurer que la passerelle 1 ne consomme pas un courant d'alimentation supérieure au courant d' alimentation maximum que peut supporter le fusible de sécurité. Lorsque la passerelle 1 est alimentée par le module d'alimentation secteur 13, le processeur 101 place les verrous secondaires dans la configuration prédéfinie et active les verrous des modules optionnels. Ainsi, lors d'une coupure d'alimentation secteur, la consommation électrique de la passerelle 1 est compatible avec le fusible de sécurité. On peut donc dire que l'activation des verrous est logicielle puisqu'elle est mise en oeuvre par le processeur 101 et que le déclenchement des coupures d'alimentation électrique est exclusivement matériel puisqu'elle ne dépend que de chaque module de détection d'une coupure de l'alimentation secteur 111, de chaque verrou 500, la configuration de chaque verrou 500 étant figée au moment d'une coupure d'alimentation secteur et de chaque module de réduction de la consommation électrique 112.

La **Fig. 6** illustre schématiquement un premier exemple de procédé de gestion de la consommation électrique selon l'invention.

Dans une étape 61, chaque module de détection d'une coupure de l'alimentation secteur 111, qui était en attente d'une détection d'une coupure d'alimentation secteur, détecte une coupure d'alimentation secteur.

Dans une étape 62, suite à la détection d'une coupure d'alimentation secteur, chaque module de détection d'une coupure d'alimentation secteur 111 provoque instantanément la coupure d'alimentation électrique de chaque module optionnel et la dégradation du fonctionnement d'au moins une partie des modules secondaires.

Lorsque le système de gestion de la consommation électrique 11 ne comprend pas de verrou tel que décrit en relation avec la Fig. 4, chaque module de réduction de la consommation électrique 112 piloté par la sortie d'un module de détection d'une coupure de l'alimentation secteur 111 provoque l'ouverture du circuit d'alimentation électrique d'un module matériel de la passerelle 1 devant être coupé.

Lorsque le système de gestion de la consommation électrique 11 comprend au moins un verrou 500 activé ou pas par le processeur 101, tel que décrit en relation avec la Fig. 5, seuls les modules matériels de la passerelle 1 associés avec un verrou 500 activé sont coupés. Cela concerne les modules secondaires associés à au moins un verrou secondaire activé et les modules optionnels.

La passerelle 1 reste dans un mode de fonctionnement où elle est alimentée par batterie, appelé mode secouru, tant que l'alimentation secteur n'est pas rétablie.

Dès que l'alimentation secteur est rétablie, celle-ci est détectée par le module de détection d'une coupure d'alimentation secteur 111 lors d'une étape 63.

Dans une étape 64, suite à la détection d'un rétablissement de l'alimentation secteur, chaque module de détection d'une coupure d'alimentation secteur 111 provoque instantanément la réactivation de chaque module matériel coupé lors de l'étape 62. Ainsi, tous les circuits d'alimentation électrique ouverts lors de l'étape 62 sont fermés.

La configuration prédéfinie permet d'assurer que le fusible de sécurité n'est pas endommagé lors d'une coupure d'alimentation secteur. La configuration prédéfinie peut être vue comme une configuration d'urgence, apte à préserver la passerelle 1. Toutefois, si la préservation du fusible de sécurité est primordiale lors d'une coupure d'alimentation secteur, il reste intéressant d'abaisser la consommation électrique de la passerelle 1 afin d'augmenter l'autonomie de la passerelle 1 lorsqu'elle est alimentée par batteries.

Jusque-là, dans la configuration prédéfinie, toutes les fonctionnalités assurées par des modules critiques ou secondaires de la passerelle sont préservées. Pour aller plus loin dans la recherche d'économie d'énergie, il est possible de couper complètement certains modules secondaires, et notamment certains modules Wi-Fi. Cependant, une coupure d'un module Wi-Fi, peut entraîner des perturbations dans un équipement distant connecté au BSS géré par ce module Wi-Fi. Pour éviter ce genre de perturbation ou au moins les limiter, il est souhaitable
- d'avertir des équipements distants associés à un BSS d'une éventuelle coupure de ce BSS ;
- de proposer aux équipements distants associés à un BSS destiné à être coupé de basculer vers un autre BSS délivré par un autre module Wi-Fi, ce BSS pouvant être sur un autre canal ou sur une autre bande.

De manière préférentielle les deux modules Wi-Fi (le module Wi-Fi destiné à être coupé et le module Wi-Fi vers lequel vont basculer les équipements distants) fonctionnent sur la même bande ISM (e.g. 2.4GHz ou 5GHz) afin de garantir que tous les équipements distants puissent supporter une communication sur le BSS proposé. Si ce n'est pas le cas, le module Wi-Fi opérant sur une bande ISM haute (e.g. 5GHz) est celui dont la coupure est privilégiée, car consommant de manière générale plus. Cependant, si aucun équipement n'est associé à un module Wi-Fi lors du passage sur batterie, ce module Wi-Fi est coupé en priorité, indépendamment de la bande sur laquelle il opère.

La **Fig. 8** illustre schématiquement un deuxième exemple de procédé de gestion de la consommation électrique selon l'invention.

Le procédé décrit en relation avec la Fig. 6 a pour objectif unique d'éviter d'endommager le fusible de sécurité. Le procédé décrit en relation avec la Fig. 8 permet d'atteindre ce même objectif. Il permet de plus, d'une part, d'abaisser la consommation d'énergie électrique de la passerelle 1 en mode secouru, et d'autre part, de limiter les perturbations subies par chaque équipement distant associé à un BSS devant être désactivé.

On note par ailleurs que, alors que le procédé décrit en relation avec la Fig. 6 est purement matériel et ne fait intervenir aucune étape logicielle, le procédé décrit en relation avec la Fig. 8 comprend des étapes matérielles et des étapes logicielles. Les étapes matérielles permettent notamment de passer instantanément en mode secouru en cas de coupure d'alimentation secteur sans endommager le fusible de sécurité.

Dans le procédé décrit en relation avec la Fig. 8, les étapes 81 et 82 sont strictement identiques aux étapes 61 et 62 déjà expliquées.

Lors d'une étape 83 suivant l'étape 82, le processeur 101 se met en attente pendant une temporisation d'une durée prédéfinie.

A la fin de cette temporisation, le processeur 101 vérifie lors d'une étape 84 si l'alimentation secteur a été rétablie. Pour ce faire, il vérifie la valeur de sortie du module de détection d'une coupure d'alimentation secteur 111.

Lorsque, lors de l'étape 84, le processeur 101 détermine que l'alimentation secteur n'a pas été rétablie, le processeur 101 passe à une étape 85.

Lors de l'étape 85, le processeur 101 obtient une information représentative de modules Wi-Fi (et de BSS gérés par ces module Wi-Fi) pouvant être coupés et transmet un message comprenant une information représentative des BSS concernés à des équipements distants associés à ces BSS. Par exemple, l'information représentative de modules Wi-Fi pouvant être coupés indique que le module Wi-Fi 1052 peut être désactivé. Le processeur 101 transmet à l'équipement distant 2C une information indiquant que le BSS 3C va être arrêté. Nous détaillons l'étape 85 par la suite.

Dans une étape 86, le processeur provoque la coupure de l'alimentation électrique de chaque module Wi-Fi pouvant être coupé. Pour ce faire, il active chaque verrou associé à un module de réduction de la consommation électrique 112 apte à couper l'alimentation électrique des modules Wi-Fi concernés. Dans l'exemple de la Fig. 1, l'alimentation électrique de chaque amplificateur de puissance du module Wi-Fi 1052 est coupée. On considère alors que le module Wi-Fi 1052 est coupé car sans amplification de puissance, ses capacités de communication sont très limitées.

Suite à la mise en oeuvre de l'étape 86, le processeur 101 met en oeuvre une étape 87 similaire à l'étape 84. Au cours de l'étape 87, le processeur 101 vérifie régulièrement si l'alimentation secteur a été rétablie. Lorsque le processeur détermine que l'alimentation secteur a été rétablie, il passe à une étape 88 que nous expliquons par la suite.

Lorsque, lors de l'étape 84, le processeur 101 détermine que l'alimentation secteur a été rétablie, le processeur 101 met en oeuvre l'étape 88.

Lors de l'étape 88, comme lors de l'étape 64, chaque module de détection d'une coupure d'alimentation secteur 111 provoque instantanément la réactivation de chaque module matériel coupé lors de l'étape 82. Ainsi, tous les circuits d'alimentation électrique ouverts lors de l'étape 82 sont fermés. Lors de l'étape 88, des modules Wi-Fi (et les BSS gérés par ces modules Wi-Fi) désactivés lors de l'étape 82 ou lors de l'étape 86 sont réactivés. Dans l'exemple de la Fig. 1, le module Wi-Fi 1052, qui a été désactivé, est réactivé lors de l'étape 88.

Lors d'une étape 89, que nous détaillons par la suite, le processeur 101 provoque une transmission de message indiquant à chaque équipement distant dont la BSS a été désactivée que celui-ci a été réactivé. Dans l'exemple de la Fig. 1, le processeur 101 provoque la transmission d'un message à l'équipement distant 2C lui indiquant que le BSS 3C est réactivé.

Lors des étapes 85 et 89, des communications de messages sont mises en oeuvre entre la passerelle et au moins un équipement distant concerné par l'activation/désactivation d'un module Wi-Fi afin de prévenir ce ou ces équipements distants de l'activation/désactivation dudit module Wi-Fi.

Ces communications de messages peuvent être mises en oeuvre en mode point à point (« unicast » en terminologie anglo-saxonne) voire en mode point à multipoints (« multicast » en terminologie anglo-saxonne) ou en mode multidiffusion (« broadcast » en terminologie anglo-saxonne).

Un avantage de l'approche point à point (respectivement l'approche point à multipoints) est qu'elle permet de traiter chaque équipement distant (respectivement un groupe d'équipements distants) de manière indépendante, tous les équipements distants n'ayant pas les mêmes capacités (« capabilities » en terminologie anglo-saxonne) et ne supportant donc pas les mêmes messages. Un inconvénient de l'approche point à point (respectivement l'approche point à multipoints) est qu'elle induit un échange d'un grand nombre de messages afin d'adresser chaque équipement distant (respectivement chaque groupe d'équipements distants), ces derniers (respectivement les équipements distants des groupes d'équipements distants) pouvant également répondre selon les messages émis et augmenter ainsi le trafic.

Un avantage de l'approche multidiffusion est que l'on peut minimiser le nombre de messages à émettre. Un inconvénient est que chaque message émis doit être compris par chaque équipement distant concerné.

Dans un mode de réalisation, l'approche point à point utilise des messages de transition de BSS (« BSS Transition Management » en terminologie anglo-saxonne), appelés par la suite messages *BTM,* introduits par l'amendement IEEE 802.11v. Un module Wi-Fi supportant les messages BTM sait si un équipement distant gère lui aussi ce type de message grâce à des informations obtenues lors de chaque demande d'association entre l'équipement distant et un BSS géré par ledit module Wi-Fi. En effet, un champ « *BSS Transition Field »* est alors positionné à « 1 » dans un élément d'information « *Extended Capabilities* » contenu dans la demande d'association.

Un module Wi-Fi supportant les messages BTM peut envoyer en point à point des trames *BTM Request* définies dans l'amendement IEEE 802.11v à chaque équipement distant qu'il souhaite informer de la désactivation d'un BSS. En utilisant les messages *BTM Request,* il est possible d'informer un équipement distant de la désactivation imminente d'un BSS en positionnant un bit d'information « *BSS Termination Included »* dans un champ « *Request Mode* » dudit message.

Dans l'exemple de la Fig. 1, le module Wi-Fi 1052 gère le BSS 3C. Lors d'une coupure d'alimentation secteur, le module Wi-Fi 1052 transmet en point à point une trame *BTM Request* à l'équipement distant 2C dans laquelle le bit d'information « *BSS Termination Included »* du champ « *Request Mode* » est positionné à « 1 ». Cette trame informe l'équipement 2C que le BSS 3C va être désactivé.

Un module Wi-Fi supportant les messages BTM peut également indiquer dans les trames *BTMRequest* une liste indiquant au moins un BSS vers lequel migrer. Cette liste peut être, par exemple, une liste prédéfinie ou une liste fournie par le processeur 101. Cette liste comprend un identifiant *BSSID* (« BSS Identifier » en terminologie anglo-saxonne) pour chaque BSS vers lequel il est conseillé de migrer avec une priorité associée. Dans l'exemple de la Fig. 1, le module Wi-Fi 1052 transmet en point à point à l'équipement distant 2C une liste de BSS comprenant le BSSID du BSS 3A avec une priorité maximale. Ladite liste a par exemple été fournie au module Wi-Fi 1052 par le processeur 101. L'équipement distant 2C peut alors tenter de se connecter au BSS 3A.

Lors de l'étape 89, le module Wi-Fi 1050 transmet en point à point un message à l'équipement 2C l'informant que le BSS 3C est rétabli. On supposera par exemple qu'ici le module Wi-Fi 1050 a été informé par le processeur 101 de la réactivation du module Wi-Fi 1052. Le module Wi-Fi 1050 utilise pour cela une trame *BTM Request* comprenant le BSSID du BSS 3C. Toutefois, dans cette étape, le bit d'information *« BSS Termination Included* » du champ « *Request Mode* » n'est pas positionné à « 1 ».

Dans un mode de réalisation, avant la coupure d'un module Wi-Fi, la passerelle 1 créée un BSS temporaire chargé de recevoir les équipements distants associés au BSS sur le point d'être désactivé. Lors de la création de ce BSS temporaire, la passerelle 1 (*i.e.* le processeur 101) informe un de ses modules Wi-Fi qu'il doit créer un BSS temporaire et transmet à ce module Wi-Fi et pour chaque équipement distant devant migrer vers la BSS temporaire, un identifiant, dit identifiant d'équipement migrant, permettant audit module Wi-Fi d'identifier chaque équipement distant. Chaque identifiant d'équipement migrant peut par exemple être une adresse MAC (« Medium Access control » : contrôle d'accès au médium en terminologie anglo-saxonne) de l'équipement distant concerné. Le module Wi-Fi choisi par la passerelle 1 peut avantageusement configurer le BSS temporaire de sorte que sa balise associée (« beacon » en terminologie anglo-saxonne) ne diffuse pas son nom de réseau associé (identifiant d'ensemble de service : « Service Set Identifier (SSID) » en terminologie anglo-saxonne) et ait une politique d'accès ouverte afin de limiter les échanges à la procédure d'association uniquement (pas d'authentification). Toutefois, ce BSS temporaire ne répond qu'à des sollicitations (messages « *Probe Request »,* « *Association Request »,* etc, tels que définis dans les protocoles IEEE802.11) provenant d'équipements distants identifiés par le module Wi-Fi choisi par la passerelle 1 grâce aux identifiants d'équipements migrants. Une telle méthode d'identification permet de ne pas avoir à configurer les équipements distants afin qu'ils aient connaissance de ce nouveau BSS temporaire. Par ailleurs, ne pas diffuser le SSID permet à des équipements distants en cours de recherche d'un BSS sur lequel se connecter et non liés à la passerelle implémentant l'invention (*e.g.* des équipements d'un voisin), de ne pas présenter l'identifiant du BSS temporaire créé comme résultat de recherche aux utilisateurs desdits équipements distants. Dans ce mode de réalisation, le module Wi-Fi destiné à être désactivé transmet dans ses trames *BTM Request* l'identifiant du BSS temporaire géré par le module Wi-Fi choisi par la passerelle 1.

Dans l'exemple de la Fig. 1, le module Wi-Fi choisi par la passerelle pour gérer le BSS temporaire est le module Wi-Fi 1050. Lors de l'étape 85, la passerelle 1 informe le module Wi-Fi 1050 qu'il va devoir créer un BSS temporaire et lui fournit l'identifiant de l'équipement distant 2C. Le module Wi-Fi 1052 transmet à l'équipement distant 2C une trame *BTM Request* comprenant l'identifiant du BSS temporaire.

Dans ce mode de réalisation, lors de l'étape 89, le module Wi-Fi 1050, informé de la réactivation du module Wi-Fi 1052 par exemple par le processeur 101, transmet à l'équipement distant 2C une trame *BTM Request* l'informant de la désactivation imminente du BSS temporaire et l'invitant à migrer soit vers son BSS d'origine (*i.e.* le BSS 3C), soit vers un autre BSS tel que le BSS 3A. Le BSS temporaire est ensuite désactivé par la passerelle 1 (*i.e.* par le processeur 101).

Dans un mode de réalisation, l'équipement distant concerné par un arrêt d'un BSS ne supporte pas les messages BTM. Dans ce cas, en cas de coupure d'alimentation secteur, un message de dé-association est envoyé à destination de l'équipement distant concerné par le module Wi-Fi sur le point d'être désactivé. Plus aucune demande d'information (« *Probe Request* ») ou d'association (« *Association Request* ») n'est alors gérée par le module Wi-Fi destiné à être désactivé. Dans ce mode de réalisation, il est possible de permettre à la passerelle 1 de sauvegarder les identifiants de chaque équipement distant associé au BSS géré par le module Wi-Fi destiné à être désactivé. Ces identifiants sauvegardés peuvent être utilisés par la passerelle 1 pour permettre à un module Wi-Fi actif de la passerelle 1 de répondre en priorité aux demandes d'information/association émanant des équipements distants correspondant à ces identifiants si ceux-ci tentent de migrer vers un BSS géré par ledit module Wi-Fi actif de la passerelle 1.

Dans l'exemple de la Fig. 1, le module Wi-Fi 1052 transmet un message de dé-association du BSS 3C à l'équipement distant 2C et sauvegarde l'identifiant de l'équipement distant 2C. Suite à cette dé-association, lorsque l'équipement distant 2C tente de s'associer au BSS 3A, il est traité en priorité par le module Wi-Fi 1050.

Lors d'un retour de l'alimentation secteur, le module Wi-Fi 1052 (et le BSS 3C) sont réactivés, chaque équipement distant étant alors libre de s'y associer. Aucune action n'est mise en oeuvre par le module Wi-Fi 1052 réactivé (*i.e.* dans ce cas l'étape 89 n'est pas mise en oeuvre par le processeur 101).

Dans un mode de réalisation, des messages transmis en mode multidiffusion (« broadcast » en terminologie anglo-saxonne) sont utilisés. Il est connu qu'un équipement distant dont on désactive le BSS avec lequel il est associé, se met en recherche d'un nouveau BSS avec lequel s'associer (soit de manière passive par recherche de balises, soit de manière active par envoi de demande d'information *Probe Request*). Afin d'aider cet équipement distant à trouver plus rapidement un canal où se situe un BSS sur lequel il peut migrer, il est possible à un module Wi-Fi devant être désactivé d'annoncer un changement de canal par le biais d'un élément d'information CSA (Annonce de changement de canal : « *Channel Switch Announcement »* en terminologie anglo-saxonne) qui peut être soit diffusé dans une trame de gestion dédiée, soit dans une balise associée au BSS avec lequel est associé ledit équipement distant. Dans les deux cas, l'élément d'information CSA est diffusé en mode-multidiffusion.

L'élément d'information CSA indique le canal sur lequel opère le BSS vers lequel migrer et quand ce changement de canal doit avoir lieu. Positionner un équipement distant sur le canal sur lequel opère le BSS vers lequel il doit migrer permet d'accélérer la migration. En effet, l'équipement distant, lors de sa recherche d'un nouveau BSS a de fortes chances de commencer par ce canal afin d'effectuer des opérations nécessaires à une récupération d'une connectivité (recherche passive de balises, *Probe Request,* ...). Dans ce mode de réalisation, la passerelle peut en outre sauvegarder les identifiants des équipements distants associés au module Wi-Fi désactivé (et au BSS désactivé). Le module Wi-Fi gérant le BSS (existant ou temporaire tel que décrit plus haut) vers lequel les équipements distants sont invités à migrer peut alors utiliser ces identifiants afin de répondre en priorité à leur demande d'information/association.

Dans l'exemple de la Fig. 1, le module Wi-Fi 1052 transmet un élément d'information CSA indiquant le canal sur lequel opère le BSS 3A et quand le changement de canal doit avoir lieu dans une balise et en mode multidiffusion. L'équipement distant 3C recevant cette balise se positionne sur le canal indiqué et effectue les opérations nécessaires à la recherche d'une connectivité afin de s'associer au BSS 3A.

Dans un autre mode de réalisation, un nouvel élément d'information est introduit dans une balise afin d'informer des équipements distants de la désactivation d'un BSS et d'inviter ces équipements distants à migrer vers un autre BSS (existant ou temporaire tel que décrit plus haut) identifié par son BSSID. Cet élément d'information reprend par exemple des champs de la trame *BTM Request* tels que les champs terminaison du BSS, instant de la terminaison et liste de BSS candidats définis dans l'amendement IEEE 802.11v. Une fois la balise reçue, chaque équipement distant associé avec un BSS destiné à être désactivé se déconnecte de ce BSS et tente de se réassocier au BSS indiqué dans l'élément d'information.

Dans un mode de réalisation, plutôt que d'introduire des informations comprises dans des trames *BTM Request dans* des balises, des trames *BTM Request* précédemment décrites comme transmises dans un mode point à point, sont transmises en mode multidiffusion.

En cas de retour de l'alimentation secteur, les équipements distants ayant migrés peuvent migrer à nouveau vers leur BSS d'origine lorsque le module Wi-Fi correspondant est remis en route. Un avantage d'utiliser un BSS temporaire est qu'il est possible de minimiser le nombre de messages à transmettre pour faire migrer tous les équipements distants ayant migré vers le BSS temporaire lors de la coupure d'alimentation secteur. Selon le mode de réalisation, si tous les équipements ayant migré supportent la réception de la trame *BTM Request* émise en mode multidiffusion telle que proposée dans la présente invention ou la réception de l'élément d'information équivalent à la trame *BTM Request* rajouté dans les balises tel que proposé dans la présente invention, alors la migration vers le BSS d'origine peut se faire de manière contrôlée par l'envoi de la trame associée (soit une trame *BTM request,* soit une balise contenant l'élément d'information équivalent à la trame *BTM Request*) en mode multidiffusion.

Si seuls certains équipements ayant migré supportent la trame *BTM Request* émise en mode point à point, alors la migration vers le BSS d'origine peut se faire de manière contrôlée par l'envoi de la trame associée (*BTM Request*) en mode point à point à chacun de ces équipements. Pour les équipements restants, l'annonce classique de fin de BSS est utilisée en indiquant dans la balise la terminaison prochaine dudit BSS temporaire. La variante reposant sur le CSA peut également être mise en oeuvre de manière réciproque.

En cas de migration vers un BSS existant, la migration vers le BSS d'origine devra se faire au cas par cas pour ne pas faire migrer aussi les équipements distant qui, avant la coupure d'alimentation secteur, étaient associés au BSS existant. Les approches point à point *BTM Request* ou désassociation sont alors utilisées selon les capacités de l'équipement à migrer.

On note que jusque-là, nous avons considéré qu'un module Wi-Fi qui créée un BSS temporaire pour accueillir des équipements distants associés à un BSS destiné à être désactivé, créée un nouveau BSS sans lien avec le BSS désactivé. Dans un mode de réalisation, il est possible de recréer un BSS similaire voire identique au BSS désactivé en reprenant des informations de sessions, voire des mémoires tampon (buffer) associées aux équipements distants connectés au BSS désactivé. Ce mode de réalisation à l'avantage d'éviter une perte d'une session Wi-Fi en cours.

Dans un mode de réalisation, l'approche multidiffusion est utilisée lors de chaque détection d'une coupure de l'alimentation secteur afin de minimiser le nombre de transmissions de messages par la passerelle 1 (et donc augmenter l'autonomie de la passerelle 1), tandis que l'approche point à point (respectivement point à multipoint) peut être privilégiée lors de la détection d'un retour de l'alimentation secteur, afin par exemple de migrer en premier les équipements distants répondant le mieux aux messages BTM. En cas de nouvelle coupure survenant en pleine migration, ces équipements distants peuvent en effet être rapatriés plus facilement de par leur support des messages BTM.

## Revendications

1. Un appareil (1) comprenant une batterie (14) protégée par un fusible de sécurité apte à supporter un courant maximum d'alimentation de l'appareil (1) pendant une durée prédéfinie, l'appareil pouvant être alimenté électriquement par une alimentation secteur (13) ou par la batterie (14), l'alimentation par la batterie étant destinée à relayer l'alimentation secteur en cas de coupure de l'alimentation secteur, et comportant en outre un système (11) de gestion de consommation électrique, ledit système comprenant :
un module (111) de surveillance d'une tension d'entrée de l'appareil et de détection d'une coupure de l'alimentation secteur de l'appareil (1) et un module (112) de coupure d'alimentation de modules matériels compris dans l'appareil (1) pour réduire la consommation électrique de l'appareil (1),
le système étant **caractérisé en ce que** :
ledit module de surveillance et de détection (111) et ledit module de coupure d'alimentation (112) sont mis en oeuvre par des modules entièrement matériels, indépendamment de toute interprétation d'instructions machine et aptes à réagir en un temps inférieur à la durée prédéfinie pendant laquelle le fusible peut supporter ledit courant d'alimentation maximum, ledit module de coupure d'alimentation (112) permettant d'obtenir une réduction de consommation électrique prédéfinie de l'appareil (1) de sorte que l'appareil (1) consomme un courant d'alimentation inférieure audit courant d'alimentation maximum, le module de coupure d'alimentation (112) étant piloté par le module de surveillance et de détection (111) pour détecter une coupure de l'alimentation secteur et configuré pour ouvrir un circuit d'alimentation électrique d'au moins un module matériel prédéfini compris dans l'appareil (1) lorsqu'une coupure d'alimentation secteur est détectée,
le circuit d'alimentation électrique d'un module matériel de l'appareil (1) ne peut être ouvert par le module de coupure d'alimentation (112) pour réduire la consommation électrique que lorsqu'un verrou (500) associé à ce module matériel est dans un mode activé et ne peut être ouvert lorsque ledit verrou est dans un mode désactivé, chaque verrou étant configuré dans le mode activé ou désactivé par un processeur (101) de l'appareil (1) en utilisant des instructions machines,
de sorte que suite à l'ouverture du circuit d'alimentation de chaque module matériel prédéfini selon la configuration du verrou (500) permettant d'obtenir la réduction de consommation électrique prédéfinie de l'appareil (1), le processeur (101) est apte à provoquer l'ouverture du circuit d'alimentation d'autres modules matériels (1052) de l'appareil (1).

2. L'appareil selon la revendication 1, **caractérisé en ce que** le module de surveillance et de détection (111) pour détecter une coupure de l'alimentation secteur comprend des moyens pour comparer une tension représentative d'une tension d'alimentation de l'appareil à une tension de référence prédéfinie, une coupure de l'alimentation secteur étant détectée lorsque la tension de référence prédéfinie est supérieure à la tension représentative de la tension d'alimentation de l'appareil.

3. Un procédé de gestion de consommation électrique dans un appareil (1) selon la revendication 1, comprenant les étapes suivantes
mises en oeuvre par les modules de surveillance et de détection (111) et de coupure d'alimentation (112) :
surveiller une tension d'alimentation d'entrée de l'appareil (1) et détecter (61) une coupure d'alimentation secteur ;
ouvrir un circuit d'alimentation électrique d'au moins un module matériel prédéfini compris dans l'appareil (1) lorsqu'une coupure d'alimentation secteur est détectée,
le circuit d'alimentation électrique d'un module matériel de l'appareil (1) ne peut être ouvert par le module de coupure d'alimentation (112) pour réduire la consommation électrique que lorsqu'un verrou (500) associé à ce module matériel est dans un mode activé et ne peut être ouvert lorsque ledit verrou est dans un mode désactivé, chaque verrou étant configuré dans le mode activé ou désactivé par un processeur (101) de l'appareil (1) en utilisant des instructions machines,
de sorte que suite à l'ouverture du circuit d'alimentation de chaque module matériel prédéfini selon la configuration du verrou (500) permettant d'obtenir la réduction de consommation électrique prédéfinie de l'appareil (1), le processeur (101) est apte à provoquer l'ouverture du circuit d'alimentation d'autres modules matériels (1050,1051,1052) de l'appareil (1).

4. Le procédé selon la revendication 3, caractérisé en ce les autres modules matériels (1050,1051,1052) comprennent une pluralité de modules de communication sans fil (1050, 1051, 1052) gérant chacun au moins une liaison de communication sans fil (3A, 3B, 3C), chaque liaison sans fil étant associée à au moins un équipement distant (2A, 2B, 2C), le procédé comprenant: vérifier si l'alimentation secteur de l'appareil (1) est rétablie ;
lorsque l'alimentation secteur n'est pas rétablie :
obtenir (85) une information représentative d'un premier module de communication sans fil (1052) pouvant être coupé et transmettre (85) à chaque équipement distant associé à une liaison sans fil gérée par le premier module de communication sans fil un message comprenant une information représentative de ladite liaison sans fil;
couper (86) l'alimentation électrique du premier module de communication sans fil ; et,
vérifier régulièrement si l'alimentation secteur a été rétablie.

5. Le procédé selon la revendication 4, **caractérisé en ce que** ledit message comprend en outre une liste indiquant à chaque équipement distant associé à une liaison sans fil gérée par le premier module de communication sans fil au moins une liaison sans fil vers laquelle migrer.

6. Le procédé selon la revendication 5, **caractérisé en ce que** la liaison sans fil vers laquelle migrer est une liaison sans fil existante gérée par un deuxième module de communication sans fil ou une liaison sans fil temporaire créée par un deuxième module de communication sans fil suite à la détection de la coupure d'alimentation secteur.

7. Le procédé selon la revendication 6, **caractérisé en ce que** le procédé comprend en outre : sauvegarder un identifiant de chaque équipement distant associé à une liaison sans fil gérée par le premier module de communication sans fil ; et, utiliser les identifiants sauvegardés pour permettre à un deuxième module de communication sans fil (1050) de traiter en priorité chaque équipement distant concerné par lesdits identifiants si ceux-ci tentent de migrer vers une liaison sans fil gérée par ledit deuxième module de communication sans fil.

8. Le procédé selon l'une quelconque des revendications 4 à 7, **caractérisé en ce que** lorsque l'alimentation secteur est rétablie, le procédé comprend en outre :
autoriser (88) la réalimentation électrique de chaque module matériel de l'appareil (1) coupé lors de la détection de la coupure de l'alimentation secteur ; et,
transmettre (89) un message à chaque équipement distant concerné par la coupure d'alimentation électrique du premier module de communication sans fil indiquant que chaque liaison sans fil gérée par le premier module de communication sans fil a été réactivée.

9. Le procédé selon l'une quelconque des revendications 4 à 8, **caractérisé en ce que** chaque message est transmis à chaque équipement distant concerné par la coupure du premier module de communication sans fil selon un mode de communication point à point ou selon un mode de communication point à multipoints ou selon un mode de communication multidiffusion.

10. Le procédé selon la revendication 9, **caractérisé en ce que** le mode de communication multidiffusion est utilisé lors d'une détection d'une coupure d'alimentation secteur, et le mode de communication point à point ou le mode de communication point à multipoints est utilisé lors d'une détection d'un rétablissement de l'alimentation secteur.

11. Programme d'ordinateur, **caractérisé en ce qu'**il comprend des instructions pour mettre en oeuvre, par un appareil (1) selon la revendication 1, des étapes du procédé selon l'une quelconque des revendications 3 à 10 lorsque ledit programme est exécuté par le processeur (101) dudit appareil (1).

12. Moyens de stockage, **caractérisés en ce qu'**ils stockent un programme d'ordinateur comprenant des instructions pour mettre en oeuvre, par un appareil (1) selon la revendication 1, des étapes du procédé selon l'une quelconque des revendications 3 à 10 lorsque ledit programme est exécuté par le processeur (101) dudit appareil (1).

## Patentansprüche

1. Vorrichtung (1), die eine Batterie (14) umfasst, die durch eine Sicherung geschützt ist, die geeignet ist, einen maximalen Versorgungsstrom der Vorrichtung (1) über eine vorgegebene Dauer auszuhalten, wobei die Vorrichtung durch eine Netzversorgung (13) oder durch die Batterie (14) mit Strom versorgt werden kann, wobei die Versorgung durch die Batterie dazu bestimmt ist, die Netzversorgung bei Unterbrechung der Netzversorgung abzulösen, und ferner ein System (11) zur Stromverbrauchsverwaltung aufweist, wobei das System Folgendes umfasst:
ein Modul (111) zur Überwachung einer Eingangsspannung der Vorrichtung und zur Detektion einer Unterbrechung der Netzversorgung der Vorrichtung (1) und ein Modul (112) zur Unterbrechung der Versorgung von Hardwaremodulen, die in der Vorrichtung (1) enthalten sind, um den Stromverbrauch der Vorrichtung (1) zu verringern, wobei das System **dadurch gekennzeichnet ist, dass**:
das Überwachungs- und Detektionsmodul (111) und das Versorgungsunterbrechungsmodul (112) von vollständig hardwarebasierten Modulen implementiert sind, unabhängig von jeglicher Interpretation von Maschinenanweisungen, und geeignet sind, in einer Zeit unter der vorgegebenen Dauer anzusprechen, während der die Sicherung den maximalen Versorgungsstrom aushalten kann, wobei es das Versorgungsunterbrechungsmodul (112) ermöglicht, eine vorgegebene Stromverbrauchsverringerung der Vorrichtung (1) zu erzielen, so dass die Vorrichtung (1) einen Versorgungsstrom verbraucht, der geringer als der maximale Versorgungsstrom ist, wobei das Versorgungsunterbrechungsmodul (112) vom Überwachungs- und Detektionsmodul (111) gesteuert wird, um eine Unterbrechung der Netzversorgung zu detektieren, und dazu ausgebildet ist, einen Stromversorgungskreis wenigstens eines vorgegebenen Hardwaremoduls zu öffnen, das in der Vorrichtung (1) enthalten ist, wenn eine Netzversorgungsunterbrechung detektiert ist,
der Stromversorgungskreis eines Hardwaremoduls der Vorrichtung (1) nur dann vom Versorgungsunterbrechungsmodul (112) geöffnet werden kann, um den Stromverbrauch zu verringern, wenn sich ein Schloss (500), das diesem Hardwaremodul zugeordnet ist, in einem aktivierten Modus befindet, und nicht geöffnet werden kann, wenn sich das Schloss in einem deaktivierten Modus befindet, wobei jedes Schloss durch einen Prozessor (101) der Vorrichtung (1) unter Verwendung der Maschinenanweisungen im aktivierten oder deaktivierten Modus konfiguriert wird,
so dass nach der Öffnung des Kreises zur Versorgung jedes Hardwaremoduls jedes vorgegebenen Hardwaremoduls gemäß der Konfiguration des Schlosses (500), wodurch die vorgegebene Stromverbrauchsverringerung der Vorrichtung (1) erzielt wird, der Prozessor (101) geeignet ist, die Öffnung des Stromversorgungskreises anderer Hardwaremodule (1052) der Vorrichtung (1) zu bewirken.

2. Vorrichtung nach Anspruch 1, **dadurch gekennzeichnet, dass** das Überwachungs- und Detektionsmodul (111) zum Detektieren einer Unterbrechung der Netzversorgung Mittel zum Vergleichen einer Spannung, die für eine Versorgungsspannung der Vorrichtung repräsentativ ist, mit einer vorgegebenen Referenzspannung umfasst, wobei eine Unterbrechung der Netzversorgung detektiert wird, wenn die vorgegebene Referenzspannung größer als die Spannung ist, die für die Versorgungsspannung der Vorrichtung repräsentativ ist.

3. Verfahren zur Stromverbrauchsverwaltung in einer Vorrichtung (1) nach Anspruch 1, das die folgenden Schritte umfasst,
die vom Überwachungs- und Detektionsmodul (111) und vom Versorgungsunterbrechungsmodul (112) durchgeführt werden:
Überwachen einer Eingangsversorgungsspannung der Vorrichtung (1) und Detektieren (61) einer Netzversorgungsunterbrechung;
Öffnen eines Stromversorgungskreises wenigstens eines vorgegebenen Hardwaremoduls, das in der Vorrichtung (1) enthalten ist, wenn eine Netzversorgungsunterbrechung detektiert ist,
wobei der Stromversorgungskreis eines Hardwaremoduls der Vorrichtung (1) nur dann vom Versorgungsunterbrechungsmodul (112) geöffnet werden kann, um den Stromverbrauch zu verringern, wenn sich ein Schloss (500), das diesem Hardwaremodul zugeordnet ist, in einem aktivierten Modus befindet, und nicht geöffnet werden kann, wenn sich das Schloss in einem deaktivierten Modus befindet, wobei jedes Schloss durch einen Prozessor (101) der Vorrichtung (1) unter Verwendung der Maschinenanweisungen im aktivierten oder deaktivierten Modus konfiguriert wird,
so dass nach der Öffnung des Kreises zur Versorgung jedes Hardwaremoduls jedes vorgegebenen Hardwaremoduls gemäß der Konfiguration des Schlosses (500), wodurch die vorgegebene Stromverbrauchsverringerung der Vorrichtung (1) erzielt wird, der Prozessor (101) geeignet ist, die Öffnung des Stromversorgungskreises anderer Hardwaremodule (1050, 1051, 1052) der Vorrichtung (1) zu bewirken.

4. Verfahren nach Anspruch 3, **dadurch gekennzeichnet, dass** die anderen Hardwaremodule (1050, 1051, 1052) eine Mehrzahl von Drahtloskommunikationsmodulen (1050, 1051, 1052) umfassen, die jeweils wenigstens eine Drahtloskommunikationsverbindung (3A, 3B, 3C) verwalten, wobei jede Drahtlosverbindung wenigstens einem Remote-Gerät (2A, 2B, 2C) zugeordnet ist, wobei das Verfahren Folgendes umfasst: Überprüfen, ob die Netzversorgung der Vorrichtung (1) wiederhergestellt ist;
wenn die Netzversorgung nicht wiederhergestellt ist:
Beziehen (85) einer Information, die für ein erstes Drahtloskommunikationsmodul (1052), das abgeschaltet werden kann, repräsentativ ist, und Übertragen (85), an jedes Remote-Gerät, das einer Drahtlosverbindung zugeordnet ist, die von dem ersten Drahtloskommunikationsmodul verwaltet wird, einer Nachricht, die eine Information umfasst, die für die Drahtlosverbindung repräsentativ ist;
Unterbrechen (86) der Stromversorgung des ersten Drahtloskommunikationsmoduls; und,
regelmäßiges Prüfen, ob die Netzversorgung wiederhergestellt wurde.

5. Verfahren nach Anspruch 4, **dadurch gekennzeichnet, dass** die Nachricht ferner eine Liste umfasst, die jedem Remote-Gerät, das einer Drahtlosverbindung zugeordnet ist, die von dem ersten Drahtloskommunikationsmodul verwaltet wird, wenigstens eine Drahtlosverbindung angibt, zu der migriert werden soll.

6. Verfahren nach Anspruch 5, **dadurch gekennzeichnet, dass** die Drahtlosverbindung, zu der migriert werden soll, eine bestehende Drahtlosverbindung, die von einem zweiten Drahtloskommunikationsmodul verwaltet wird, oder eine temporäre Drahtlosverbindung ist, die von einem zweiten Drahtloskommunikationsmodul nach der Detektion der Netzversorgungsunterbrechung hergestellt wird.

7. Verfahren nach Anspruch 6, **dadurch gekennzeichnet, dass** das Verfahren ferner Folgendes umfasst: Speichern einer Kennung jedes Remote-Geräts, das einer Drahtlosverbindung zugeordnet ist, die von dem ersten Drahtloskommunikationsmodul verwaltet wird; und Verwenden der gespeicherten Kennungen, um es einem zweiten Drahtloskommunikationsmodul (1050) zu ermöglichen, jedes Remote-Gerät, das von den Kennungen betroffen ist, mit Priorität zu behandeln, wenn diese versuchen, zu einer Drahtlosverbindung zu migrieren, die vom zweiten Drahtloskommunikationsmodul verwaltet wird.

8. Verfahren nach einem der Ansprüche 4 bis 7, **dadurch gekennzeichnet, dass**, wenn die Netzversorgung wiederhergestellt ist, das Verfahren ferner Folgendes umfasst:
Zulassen (88) der erneuten Stromversorgung jedes Hardwaremoduls der Vorrichtung (1), das bei der Detektion der Unterbrechung der Netzversorgung abgeschaltet wurde; und,
Übertragen (89) einer Nachricht an jedes Remote-Gerät, das von der Stromversorgungsunterbrechung des ersten Drahtloskommunikationsmoduls betroffen ist, die angibt, dass jede Drahtlosverbindung, die von dem ersten Drahtloskommunikationsmodul verwaltet wird, reaktiviert wurde.

9. Verfahren nach einem der Ansprüche 4 bis 8, **dadurch gekennzeichnet, dass** jede Nachricht gemäß einem Unicast-Kommunikationsmodus oder gemäß einem Multicast-Kommunikationsmodus oder gemäß einem Broadcast-Kommunikationsmodus an jedes Remote-Gerät übertragen wird, das von der Abschaltung des ersten Drahtloskommunikationsmoduls betroffen ist.

10. Verfahren nach Anspruch 9, **dadurch gekennzeichnet, dass** der Broadcast-Kommunikationsmodus bei einer Detektion einer Netzversorgungsunterbrechung verwendet wird und der Unicast-Kommunikationsmodus oder der Multicast-Kommunikationsmodus bei einer Detektion einer Wiederherstellung der Netzversorgung verwendet wird.

11. Computerprogramm, **dadurch gekennzeichnet, dass** es Anweisungen zur Durchführung der Schritte des Verfahrens nach einem der Ansprüche 3 bis 10 durch eine Vorrichtung (1) nach Anspruch 1 bei Ausführung des Programms durch den Prozessor (101) der Vorrichtung (1) umfasst.

12. Speichermittel, **dadurch gekennzeichnet, dass** sie ein Computerprogramm speichern, das Anweisungen zur Durchführung der Schritte des Verfahrens nach einem der Ansprüche 3 bis 10 durch eine Vorrichtung (1) nach Anspruch 1 bei Ausführung des Programms durch den Prozessor (101) der Vorrichtung (1) umfasst.

## Claims

1. An appliance (1) comprising a battery (14) protected by an emergency fuse able to withstand a maximum supply current to the appliance (1) for a predefined period, the appliance being able to be supplied electrically by a mains supply (13) or by the battery (14), the battery supply being intended to take over from the mains supply in the event of a break in the mains supply, and moreover comprising a system (11) for managing electrical consumption, said system comprising:
a module (111) for monitoring an input voltage of the appliance and detecting a break in the mains supply to the appliance (1), and a module (112) for cutting off supply to hardware modules included in the appliance (1) to reduce the electrical consumption of the appliance (1),
the system being **characterised in that**:
said monitoring and detection module (111) and said supply cutoff module (112) are implemented by entirely hardware modules, independently of any interpretation of machine instructions and able to react in a time shorter than the predefined period during which the fuse can withstand said maximum supply current, said supply cutoff module (112) making it possible to obtain a predefined reduction in electrical consumption of the appliance (1) so that the appliance (1) consumes a supply current smaller than said maximum supply current, the supply cutoff module (112) being controlled by the monitoring and detection module (111) to detect a break in the mains supply and configured to open an electrical supply circuit of at least one predefined hardware module included in the appliance (1) when a break in mains supply is detected,
the electrical supply circuit of a hardware module of the appliance (1) can be opened by the supply cutoff module (112) to reduce the electrical consumption only when a lock (500) associated with this hardware module is in an activated mode and cannot be opened when said lock is in a deactivated mode, each lock being configured in the activated or deactivated mode by a processor (101) of the appliance (1) using machine instructions,
so that, following the opening of the supply circuit of each predefined hardware module according to the configuration of the lock (500) making it possible to obtain the predefined reduction in the electrical consumption of the appliance (1), the processor (101) is able to cause the opening of the supply circuit of other hardware modules (1052) of the appliance (1).

2. The appliance according to claim 1, **characterised in that** the monitoring and detection module (111) for detecting a break in the mains supply comprises means for comparing a voltage representing a supply voltage of the appliance with a predefined reference voltage, a break in the mains supply being detected when the predefined reference voltage is higher than the voltage representing the supply voltage of the appliance.

3. A method for managing electrical consumption in an appliance (1) according to claim 1, comprising the following steps
performed by the monitoring and detection module (111) and supply cutoff module (112):
monitoring an input supply voltage of the appliance (1) and detecting (61) a break in mains supply;
opening an electrical supply circuit of at least one predefined hardware module included in the appliance (1) when a break in mains supply is detected,
the electrical supply circuit of a hardware module of the appliance (1) can be opened by the supply cutoff module (112) for reducing the electrical consumption only when a lock (500) associated with this hardware module is in an activated mode and cannot be opened when said lock is in a deactivated mode, each lock being configured in the activated or deactivated mode by a processor (101) of the appliance (1) using machine instructions,
so that, following the opening of the supply circuit of each predefined hardware module according to the configuration of the lock (500) making it possible to obtain the predefined reduction in electrical consumption of the appliance (1), the processor (101) is able to cause the opening of the supply circuit of other hardware modules (1050, 1051, 1052) of the appliance (1).

4. The method according to claim 3, **characterised in that** the other hardware modules (1050, 1051, 1052) comprises a plurality of wireless communication modules (1050, 1051, 1052) each managing at least one wireless communication connection (3A, 3B, 3C), each wireless connection being associated with at least one remote item of equipment (2A, 2B, 2C), the method comprising: checking whether the mains supply to the appliance (1) is be established,
when the mains supply is not re-established:
obtaining (85) information representing a first wireless communication module (1052) that may be cut off and transmitting (85), to each remote item of equipment associated with a wireless connection managed by the first wireless communication module, a message comprising information representing said wireless connection;
cutting off (86) the electrical supply to the first wireless communication module; and
regularly checking whether the mains supply has been re-established.

5. The method according to claim 4, **characterised in that** said message further comprises a list indicating, to each remote item of equipment associated with a wireless connection managed by the first wireless communication module, at least one wireless connection to migrate to.

6. The method according to claim 5, **characterised in that** the wireless connection to migrate to is an existing wireless connection managed by a second wireless communication module or a temporary wireless connection created by a second wireless communication module following the detection of the break in mains supply.

7. The method according to claim 6, **characterised in that** the method further comprises: saving an identifier of each remote item of equipment associated with a wireless connection managed by the first wireless communication module; and using the saved identifiers to enable a second wireless communication module (1050) to treat as a priority each remote item of equipment to which said identifiers relate if they attempt to migrate to a wireless connection managed by said second wireless communication module.

8. The method according to any of claims 4 to 7, **characterised in that**, when the mains supply is re-established, the method further comprises:
allowing (88) the electrical resupply of each hardware module of the appliance (1) cut off when the break in the mains supply is detected; and
transmitting (89) a message to each remote item of equipment involved in the break in mains supply of the first wireless communication module indicating that each wireless connection managed by the first wireless communication module has been reactivated.

9. The method according to any one of claims 4 to 8, **characterised in that** each message is transmitted to each remote item of equipment involved in the cutting off of the first wireless communication module according to a unicast communication mode or according to a multicast communication mode or according to a broadcast communication mode.

10. The method according to claim 9, **characterised in that** the broadcast communication mode is used when a break in mains supply is detected, and the unicast communication mode or the multicast communication mode is used when a reestablishment of the mains supply is detected.

11. Computer program, **characterised in that** it comprises instructions for implementing, by an appliance (1) according to claim 1, steps of the method according to any one of claims 3 to 10 when said program is executed by the processor (101) of said appliance (1).

12. Storage means, **characterised in that** they store a computer program comprising instructions for implementing, by an appliance (1) according to claim 1, the steps of the method according to any one of claims 3 to 10 when said program is executed by a processor (101) of said appliance (1).
